# EUROPEAN PATENT APPLICATION

(11) **EP 4 679 128 A1**
(43) Date of publication of application: **14.01.2026**
(21) Application number: 24187770.3
(22) Date of filing: 10.07.2024
(51) Int. Cl.: G01S 7/40, G01S 13/931

(54) **LASER DEVICE FOR VERIFICATION OF RADAR CALIBRATION (LDVRC) AND METHOD: GROUND TRUTH MEASUREMENT OF SENSOR MISALIGNMENT**

(71) Applicant: Aptiv Technologies AG, 8200 Schaffhausen (CH)
(72) Inventor: ABBRUZZESE, Gianmarco, 8200 Schaffhausen (CH); RÖMHILD, Torsten, 8200 Schaffhausen (CH)
(74) Representative: Bardehle Pagenberg Partnerschaft mbB Patentanwälte Rechtsanwälte

(57) **Abstract**

A radar calibration device for calibrating radar sensors in vehicles, in particular passenger cars, comprises a housing; at least two lasers; wherein the housing is adapted to be mounted onto the mounting bracket of a radar sensor of a vehicle. A method of calibrating a radar device in vehicles, in particular passenger cars, comprises the steps of a.) providing: a radar calibration device according to any of the preceding claims 1 to 8; a calibration target; and a radar device to be calibrated, mounted on a vehicle; b.) exchanging the radar calibration device for the radar device; c.) operating the lasers with the laser beams pointing to the calibration target; d.) measuring a deviation between the points projected by the laser beams and a target value; and e.) calibrating the radar device utilizing the deviation.

## Description

### 1. Field of the invention

This invention relates to a radar calibration device, a radar calibration system and a radar calibration method, particularly for calibrating a radar sensor of a passenger vehicle.

### 2. Background

In the automotive industry, the increasing number of advanced driver-assistance systems (ADAS) is necessitating efficient and precise calibration devices, systems and methods thereof. A common type of ADAS are radar devices and/or systems. Typically, radar devices or systems in vehicles are integrated behind covers or fascias to keep them out of sight. These radars are strategically positioned using mounting brackets that connect to the vehicle, creating a unique tolerance chain for each vehicle. Therefore, it's essential to perform an end-of-line calibration at the production's end to ensure the radar is correctly positioned. If the radar's placement is not within the expected range, it requires adjustments. Existing methods for this calibration, especially for front radars not obstructed by covers, involve a single-beam laser pointer that must be precisely adjusted before measurement. This process, however, does not suit concealed radars on bumpers due to its cumbersome-ness and lack of precision. The known apparatus for front-looking radars that are not behind covers consists of two steel sleeves; one fixed to the radar attachment points and an adjustable inner one for aligning the laser pointer. However, this apparatus is too bulky, does not fit well in limited spaces, and lacks the necessary accuracy.

It is disadvantageously here, that current radar calibration devices are not applicable across various radar types and do not achieve high accuracy. Thus, there is a demand for improved radar devices, systems and methods thereof.

In view of the foregoing, there is a need for an improved radar calibration device, system and method. It is thus an object of the present invention to overcome some or all the deficiencies of the prior art.

### 3. Summary

The above objects are at least partially achieved by the subject matter of independent claim **1.** Preferred embodiments are the subject of the dependent claims, and the skilled person will find clues to other suitable aspects of the present invention in the overall disclosure of the present application.

An aspect of the invention relates to a radar calibration device for calibrating radar sensors in vehicles, in particular passenger cars, the device comprising: a housing; at least two lasers; wherein the housing is adapted to be mounted onto the mounting bracket of a radar sensor of a vehicle.

This radar calibration device could be used in automotive workshops or manufacturing plants where precision in radar sensor alignment and functionality is critical. By attaching the device directly to the radar sensor's existing mounting bracket, it ensures stability and accuracy during the calibration process. Due to production tolerances the mounting brackets may be offset from the design position, typically by only a very small amount. Nevertheless, even a very small deviation from the design position can lead to relevant inaccuracies of the mounted radar device. By using the mounting bracket for holding the calibration device, the calibration is adjusted individually for each vehicle. The inclusion of at least two lasers allows for precise measurement and adjustment of the radar's alignment and range, which is essential for optimal sensor performance.

Another aspect of the invention is realized, when the device is configured such that the emitted laser beams radiate in a common plane and are tilted with respect to each other, such that the emitted laser beams converge, wherein preferably the tilt angle between the beams is in the range 0.5 to 5 degree, more preferably in the range 1 to 4 degree, even more preferably in the range 1.5 to 3 degree.

The convergence of the laser beams at specific angles enhances the device's capability to fine-tune the radar sensors' directional accuracy and sensitivity, in particular with regard to the radars' yaw, pitch, and roll. The specified ranges of tilt angles allow for adjustments tailored to different vehicle specifications and sensor setups, thereby providing a versatile tool that can be adapted to various calibration needs. This configuration not only improves the calibration accuracy but also significantly reduces the time required for sensor alignment, leading to increased efficiency in vehicle production and maintenance processes. For instance, by using two lasers tilted with respect to each other at 2°, it's possible to calculate both the distance and the misalignment in yaw, pitch, and roll.

Another aspect of the invention is achieved, when the housing comprises at least one deflection portion, preferably a mirror, to deflect the laser beams.

The inclusion of a deflection portion, such as a mirror, within the housing of the radar calibration device allows for greater flexibility in the positioning and angling of the laser beams. This setup is crucial for adapting the calibration process to various types of radar sensors and vehicle configurations. The ability to deflect beams ensures that calibration can be achieved even in tight spaces within a vehicle, thus supporting calibration coverage and functionality.

This embodiment can further be improved, when during operation of the lasers, the laser beams are deflected at least once inside the housing.

The internal deflection of the laser beams within the housing before they exit the device adds a crucial layer of precision in calibrating radar sensors. This internal pathway allows for the modification and fine-tuning of the beam's direction and focus, enabling precise alignment with the radar sensor's requirements. The controlled environment within the housing minimizes external interferences and increases the accuracy of the beam's placement on the radar sensor. The ability to manipulate the beam direction internally before it reaches the sensor allows for a more controlled and refined calibration process, enhancing the performance and reliability of the radar system.

To develop this embodiment the at least one deflection portion is arranged titled at an angle in the range 5 to 85 degree, preferably 15 to 75 degrees, even more preferably 30 to 60 degrees relative to the laser beams.

The tilting of the deflection portion within these specified angles allows for optimized redirection of the laser beams as it enhances the device's ability to adapt to different sensor configurations and geometries, making it a versatile tool for use in various vehicle models and setups. By setting the deflection angle within this range, the device can efficiently manage the spread and focus of the beams, ensuring that the calibration is both precise and effective.

Another aspect of the invention is realized, when the housing is made of a material with a density lower than 3 g/cm³, preferably of aluminum.

The choice of aluminum for the housing is significant due to its lightweight nature, durability, and good heat dissipation properties. Using a low-density material like aluminum makes the device easier to handle and install, particularly when mounting it on various types of radar sensors mounting brackets in different vehicle configurations.

A further embodiment is attained, when the housing comprises through holes configured and dedicated to accommodating the lasers.

The inclusion of through holes tailored for the lasers facilitates precise alignment and stable mounting of the lasers within the housing. This arrangement ensures that the laser beams are emitted in the correct direction and angle as required for effective radar sensor calibration. Such a design is particularly advantageous in environments where the device might be subject to adjustments, such as during calibration tasks.

Another aspect of the invention is realized, when the device further comprises a plug for establishing electrical connection between the lasers and the electrical infrastructure of the vehicle, when the device is mounted onto the mounting bracket.

Such a plug can serve as an interface that ensures the lasers are powered directly from the vehicle's electrical system. This simplifies the setup process, as it eliminates the need for external power sources or complicated wiring procedures. This feature is particularly beneficial for seamless integration and operation of the calibration device within the vehicle's existing framework. This connectivity can also facilitate easier control and data synchronization of the lasers with the vehicle's control systems, enhancing the overall efficiency of the calibration process. This is advantageous as it helps reducing setup time and increasing the effectiveness of using the calibration device.

Another aspect of the invention is a system for calibrating radar sensors in vehicles, in particular passenger cars, comprising a radar calibration device for calibrating radar sensors in vehicles, and a radar sensor mounting bracket for a vehicle.

Such a system integrates the radar calibration device with a vehicle-specific mounting bracket, facilitating a streamlined and precise calibration process for radar sensors. The calibration device is designed to fit seamlessly with the mounting bracket, allowing for easy and secure attachment to the vehicle. This setup ensures that the calibration device is similarly, if not identically, positioned like the radar sensor.

To improve such a system, the radar sensor mounting bracket has a three-dimensional mounting contour and the housing has a corresponding three-dimensional mounting contour, that fits snugly into the contour of the bracket.

Such a precise interlocking of the housing's contour with that of the radar sensor mounting bracket ensures a highly stable and secure connection between the calibration device and the vehicle. This alignment is crucial for maintaining the correct positioning of the calibration device in accordance with the radar sensors' positioning. The three-dimensional contours facilitate an improved fit that prevents movement or misalignment, thus enhancing the accuracy and consistency of the calibration. The snug fit between the mounting bracket and the device's housing not only simplifies installation but also significantly reduces the likelihood of calibration errors due to misalignments, ensuring that the calibrations device operates effectively and reliably.

Another aspect of the invention is a method of calibrating a radar device in vehicles, in particular passenger cars, comprising the steps of: a.) providing: a radar calibration device; a calibration target; and a radar device to be calibrated, mounted on a vehicle;b.) exchanging the radar calibration device for the radar device; c.) operating the lasers with the laser beams pointing to the calibration target; d.) measuring a deviation between the points projected by the laser beams and a target value; and e.) calibrating the radar device utilizing the deviation.

The method starts by providing the necessary equipment, including the radar calibration device. The radar device currently installed in the vehicle is then exchanged with the radar calibration device, ensuring that the calibration device is precisely positioned where the radar device was originally located. Once the calibration device is in place, the lasers are operated, directing the laser beams at the calibration target. This step involves measuring any deviations between the points where the laser beams hit the calibration target and a predetermined target value. These deviations are indicative of the extent to which the radar device's alignment or output differs from expected norms or settings. Following the identification of deviations, the calibration of the radar device is conducted using the measured deviations to adjust the radar's settings or alignment accordingly. This calibration process ensures that the radar device will function accurately within its operational environment.

This method can be also used when the radar device is a short-range radar.

Using the measured deviations to calibrate the radar device is particularly beneficial for short-range radars, as these calibration adjustments ensure that the radar can reliably function in scenarios requiring high accuracy and immediate response.

The method can be improved, when the distance between the radar calibration device and the calibration target is the distance of the operational range of the radar device multiplied with a value in the range 2 to 20, preferably in the range 6 to 16, even more preferably in the range 8 to 14.

This methodology is especially important for ensuring that the radar device maintains high accuracy and reliability across its entire operational range. This practice is crucial for applications where the radar to be calibrated must perform under diverse environmental and speed conditions in later use. By calibrating at these distances, the radar can be fine-tuned to deliver consistent performance within its operational range. The operational range refers to the end of line calibration which is in general about 1 to 2 meters. A recommended factor of 10 would for instance relate to 10 to 20 meters.

To improve this method even more the radar calibration device is powered by the vehicle and/or by an external battery.

When powered by the vehicle, the calibration device integrates smoothly with the vehicle's systems, facilitating a seamless operation that leverages the vehicle's infrastructure. Alternatively, the option to power the radar calibration device with an external battery offers the advantage of portability and independence from the vehicle's power supply.

This method is improved, when the calibration target comprises a scale, preferably a millimeter scale, even more preferably millimeter paper.

Including a millimeter scale or millimeter paper as part of the calibration target provides a high level of precision in measuring the accuracy and deviation of the radar device's sensor readings. The use of millimeter paper as the preferred calibration target material facilitates a more meticulous and accurate calibration process.

The described device, system and method is versatile enough to work with the installation spaces of all radar types and is lightweight enough to also be used with radars mounted on plastic brackets. It enables the achievement of a high degree of accuracy, for example 0.1 degrees, due to the fixed installation of the lasers and mirrors, and the addition of a second laser allows for measuring distance and detecting roll misalignment.

### 4. Brief description of the figures

In the following, preferred embodiments of the disclosure are disclosed by reference to the accompanying figures.
- Fig. 1:: illustrates the front side of a radar calibration device according to the invention in a perspective view.
- Fig. 2:: shows the back side of the radar calibration device of figure 1 in a perspective view.
- Fig. 3:: shows an exploded view of the radar calibration device of Fig. 1 and Fig. 2 in a perspective view.
- Fig. 4A:: illustrates the front side of a radar calibration device in a top view.
- Fig. 4B:: illustrates a radar device corresponding to the radar calibration device of Fig. 4A in a top view.

### 5. Detailed description of the figures

The subsequent sections provide a detailed description of the invention, referencing the accompanying illustrations for clarity. The descriptions represent examples only and are not intended to limit the invention's scope. Identical reference numerals across the figures and text denote the same components. The illustrations may not reflect actual size or scale; their dimensions, proportions, and depictions of elements might be enhanced for better understanding and visual convenience.

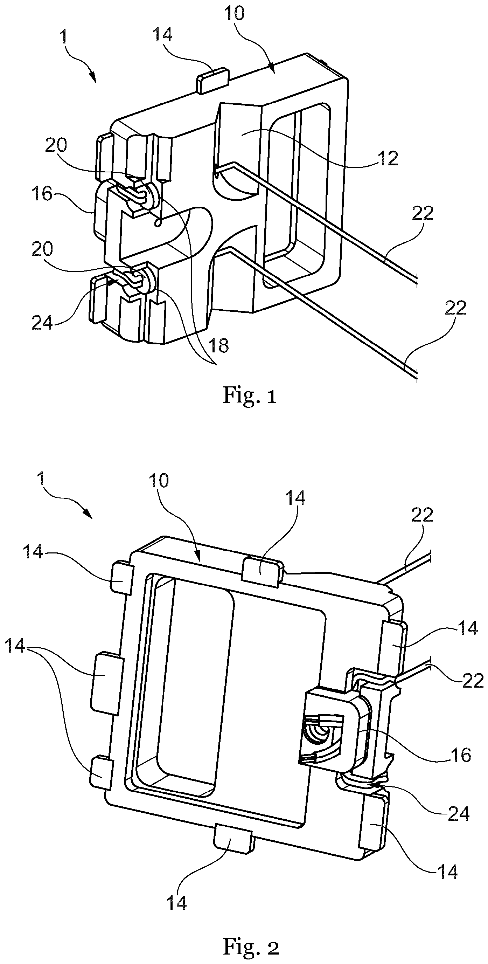

Figure 1 illustrates a radar calibration device 1 according to the invention. It comprises a housing 10 and two lasers 20, which are arranged inside through holes 18. The lasers emit laser beams 22, which are deflected by deflection means 12. Power supply for the lasers is realized by wires 24, connecting the lasers 20 with a plug 16. The housing 14 also comprises mounting means 14.

The housing 10 serves as the structural framework of the calibration device, protecting internal components and supporting assembly, while the lasers 20 are positioned within the housing, in particular within through holes 18 of the housing. These lasers are essential for the calibration process as they emit beams used to align and calibrate the radar sensor. The converging laser beams 22 are emitted from the lasers, directed towards a calibration target. Their path is important for the calibration accuracy. The deflection means 12 can for instance be mirrors or other reflective materials, these are used to direct the emitted laser beams towards specific targets. Instead of mirrors the deflecting means can also be realized with polished surfaces. The wires 24 provide electrical connectivity, linking the lasers 20 to a power source through a plug 16, ensuring that the lasers have the necessary power to operate, while the plug 16 facilitates the electrical connection between the lasers and the vehicle's electrical system or an external power source. The mounting means 14 are part of the housing and are designed to securely attach the radar calibration device to the mounting brackets of a vehicle.

They correspond to the mounting means of the radar device so that a radar device mounted on a vehicle can be readily exchanged for the radar calibration device 1.

Figure 2 shows the back side of the radar calibration device 1. In this embodiment, seven mounting means 14 in form of brackets are attached to the housing 10. The plug 16 accommodates the wires 24. The laser beams 22 are emitted from the other side of the housing 10 (not visible).

The housing 10 acts as the core structure of the device, housing its internal components. The seven mounting means 14 are realized as seven mounting brackets attached to the housing. These brackets are designed to secure the calibration device to the radar sensor's mounting bracket on the vehicle, providing a stable and precise setup necessary for accurate calibration, while the plug 16 serves as the junction for the wires 24, thus ensuring an electrical connection. This plug facilitates the power supply to the lasers from either the vehicle's electrical system or an external battery, making the setup versatile for different calibration environments. The laser beams 22 emitted from the opposite side of the housing (not visible in this view) are basal for the calibration process, as they are used to adjust the radar sensor based on the calibration results.

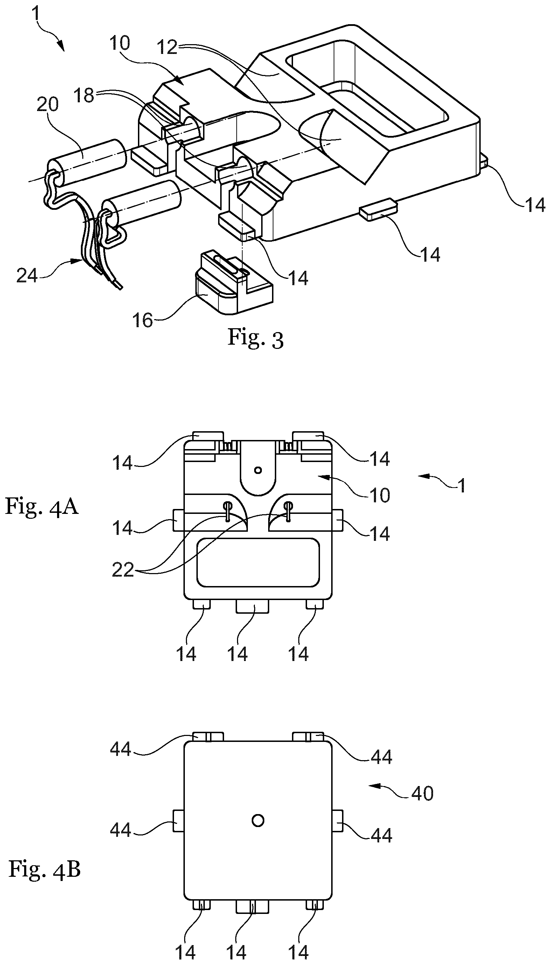

Figure 3 shows the radar calibration device 1 of Figure 1 and Figure 2 in an exploded view drawing. Accordingly, it comprises a housing 10 and two lasers 20, which are arranged inside through holes 18. Deflection means 12 are arranged in the housing for deflecting laser beams. Power supply for the lasers is also realized by wires 24, connecting the lasers 20 with a plug 16. The housing 10 as well comprises mounting means 14.

This view offers a detailed breakdown of the individual components and how they fit together within the device. The housing 10 is the central structure of the device that houses all other components. It provides protection and structural support for the delicate internal parts. The lasers 20 are strategically placed within through holes 18 in the housing 10. The through holes 18 ensure that the lasers are securely held in place and aligned correctly to emit beams at the required angles for calibration. The laser beams 22 emitted by the lasers are intended for alignment and calibration tasks. The deflection means 12 is typically comprising mirrors or other reflective surfaces, as these elements are crucial for directing the emitted laser beams towards the calibration target. They might also be adjustable to allow for precise control over the beam direction. The wires 24 provide electrical connectivity, linking the lasers 20 to a power source through the plug 16. The plug 16 connects the internal wiring to an external power source or the vehicle's electrical system, ensuring that the lasers have the necessary power to operate effectively. The mounting means 14 are integral to the housing and designed for securing the device to the corresponding mounting brackets of a radar device in a vehicle. They ensure that the device remains stable and correctly positioned during calibration.

Figure 4A depicts a radar calibration device 1 in a front view, so that the laser beams 22 are deflected in the direction outside the drawing plane. The mounting means 14 are realized as seven mounting brackets arranged circumferentially around the housing 10.

The radar calibration device 1 features mounting means 14 in form of seven mounting brackets, which are visible in this front view. These brackets are crucial for securely attaching the radar calibration device to the vehicle's radar sensor mounting bracket. The number and arrangement of the brackets are designed to provide a robust and stable connection, ensuring that the device remains fixed in the correct position for accurate calibration.

Figure 4B illustrates a radar device 40, corresponding to the radar calibration device 1 from Figure 4A in a front view. Accordingly, the mounting means 44 are as well realized as seven mounting brackets.

The mounting means 44 of the radar device 40 are corresponding to the mounting means of the radar calibration device, thus the radar device 40 is equipped with seven mounting brackets 44. The consistency in the number and form of the brackets between the calibration device and the radar device ensures that they can be interchangeably mounted. The congruence between the mounting brackets of the radar device and the radar calibration device is crucial as it ensures that any adjustments or alignments made using the calibration device will be accurately reflected in the radar device.

### Reference list:

1: radar calibration device
10: housing
12: deflection means
14: mouting means
16: plug
18: through holes
20: laser
22: laser beam
24: wires
40: radar device
44: mounting means of radar device

## Claims

1. A radar calibration device for calibrating radar sensors in vehicles, in particular passenger cars, the device comprising:
a housing;
at least two lasers;
wherein the housing is adapted to be mounted onto the mounting bracket of a radar sensor of a vehicle.

2. The device according to claim 1, wherein the device is configured such that the emitted laser beams radiate in a common plane and are tilted with respect to each other, such that the emitted laser beams converge, wherein preferably the tilt angle between the beams is in the range 0.5 to 5 degree, more preferably in the range 1 to 4 degree, even more preferably in the range 1.5 to 3 degree.

3. The radar calibration device according to any of the preceding claims, wherein the housing comprises at least one deflection portion, preferably a mirror, to deflect the laser beams.

4. The radar calibration device according to claim 3, wherein during operation of the lasers, the laser beams are deflected at least once inside the housing.

5. The radar calibration device according to claim 3 or 4, wherein the at least one deflection portion is arranged titled at an angle in the range 5 to 85 degree, preferably 15 to 75 degrees, even more preferably 30 to 60 degree relative to the laser beams.

6. The radar calibration device according to any of the preceding claims, wherein the housing is made of a material with a density lower than 3 g/cm³, preferably of aluminum.

7. The radar calibration device according to any of the preceding claims, wherein the housing comprises through holes configured and dedicated to accommodating the lasers.

8. The radar calibration device according to any of the preceding claims, wherein the device further comprises a plug for establishing electrical connection between the lasers and the electrical infrastructure of the vehicle, when the device is mounted onto the mounting bracket.

9. A system for calibrating radar sensors in vehicles, in particular passenger cars, comprising a device according to any one of the preceding device claims, and a radar sensor mounting bracket for a vehicle.

10. The system according to claim 9, wherein the radar sensor mounting bracket has a three-dimensional mounting contour and the housing has a corresponding three-dimensional mounting contour, that fits snugly into the contour of the bracket.

11. A method of calibrating a radar device in vehicles, in particular passenger cars, comprising the steps of:
a.) providing:
a radar calibration device according to any of the preceding claims 1 to 8;
a calibration target; and
a radar device to be calibrated, mounted on a vehicle;
b.) exchanging the radar calibration device for the radar device;
c.) operating the lasers with the laser beams pointing to the calibration target;
d.) measuring a deviation between the points projected by the laser beams and a target value; and
e.) calibrating the radar device utilizing the deviation.

12. The method of calibrating a radar device according to claim 11, wherein the radar device is a short-range radar.

13. The method of calibrating a radar device according to any of the claims 11 or 12, wherein the distance between the radar calibration device and the calibration target is the distance of the operational range of the radar device multiplied with a value in the range 2 to 20, preferably in the range 6 to 16, even more preferably in the range 8 to 14.

14. The method of calibrating a radar device according to any of the claims 11 to 13, wherein the radar calibration device is powered by the vehicle and/or by an external battery.

15. The method of calibrating a radar device according to any of the claims 11 to 14, wherein the calibration target comprises a scale, preferably a millimeter scale, even more preferably millimeter paper.
